# EUROPEAN PATENT APPLICATION

(11) **EP 1 261 104 A2**
(43) Date of publication of application: **27.11.2002**
(21) Application number: 02010187.9
(22) Date of filing: 14.05.2002
(51) Int. Cl.: H02K 1/27

(54) **Permanent magnet type rotating electrical machine**

(30) Priority: 25.05.2001 JP 2001156327
(71) Applicant: Hitachi, Ltd., Chiyoda-ku, Tokyo 101-8010 (JP)
(72) Inventor: Koharagi, Haruo, Taga-gun, Ibaraki 319-1302 (JP); Wakui, Shinichi, Hitachi-shi, Ibaraki 316-0014 (JP); Kimura, Mamoru, Hitachi-shi, Ibaraki 316-0036 (JP); Kikuchi, Satoshi, Hitachi-shi, Ibaraki 316-0032 (JP); Takahata, Ryoichi, Hitachi-shi, Ibaraki 316-0036 (JP); Maki, Kohji, Hitachi-shi, Ibaraki 316-0036 (JP); Tahara, Kazuo, Hitachi-shi, Ibaraki 316-0032 (JP); Miyata, Kenji, Hitachinaka-shi, Ibaraki 312-0041 (JP); Kitamura, Masashi, Mito-shi, Ibaraki 310-0842 (JP); Takahashi, Miyoshi, Hitachi-shi, Ibaraki 316-0001 (JP)
(74) Representative: Beetz & Partner Patentanwälte

(57) **Abstract**

A permanent magnet type rotating electrical machine capable of reducing core loss due to armature reaction magnetic flux and making an effective use of reactance torque. A permanent magnet type rotating electrical machine comprising a first rotor core (1) containing a permanent magnet (4) and a second rotor core (2) having a flux barrier (8) without magnet, wherein a concave portion (12) is provided between poles in the vicinity of outer surface the rotor core containing the permanent magnet and the length of the gap in the magnetic path on the q-axis side is increased to ensure easy passage of the magnetic path of the armature reaction magnetic flux on the reluctance torque rotor side, whereby a permanent magnet type rotating electrical machine delivering a large output can be obtained by making an effective use of reluctance torque.

## Description

### BACKGROUND OF THE INVENTION:

### (Field of the Invention)

The present invention relates to the permanent magnet type rotating electrical machine having a rotor equipped with a permanent magnet for field and, particularly, to the permanent magnet type rotating electrical machine suitable to be mounted on the compressor of an air conditioner.

### (Prior Art)

According to the disclosure of the Japanese Application Patent Laid-Open Publication No. Hei 11-285188, the rotor core in a permanent magnet type rotating electrical machine comprises a first core producing only the reluctance torque and a second core for generating at least magnet torque wherein permanent magnets in the number corresponding to the number of poles are embedded along the outer periphery of the core at an equally spaced interval.

The Japanese application patent laid-open publication No. 2000-37052 discloses a permanent magnet type rotating electrical machine wherein a permanent magnet rotor is located at the center and a reluctance torque rotor is arranged on each of both ends.

### SUMMARY OF THE INVENTION:

### (Problems to be Solved by the Invention)

To use the reluctance torque, it is necessary to generate the armature reaction magnetic flux to be created by armature wiring. However, all of said prior arts have the problem that there is an increase in core loss due to armature reaction magnetic flux even if reluctance torque is produced, and the output of permanent magnet type rotating electrical machine cannot be improved.

The first object of the present invention is to provide a permanent magnet type rotating electrical machine capable of suppressing the increase of core loss due to armature reaction magnetic flux and making an effective use of reluctance torque.

The second object of the present invention is to provide a permanent magnet type rotating electrical machine which is mounted on the compressor of the air conditioner and which can be driven by a 180-degree current-applied inverter without magnetic pole position sensor, utilizing the change in reluctance.

### (Means for Solving the Problems)

To improve the output of the permanent magnet type rotating electrical machine, an effective use of reluctance torque is essential. Reluctance torque relates to the magnitude of armature reaction magnetic flux produced by the current supplied to the armature wiring. Armature reaction magnetic flux passes through the interpolar core positioned between poles of the permanent magnet of the rotor core. However, the inter-polar core also passes through the magnetic flux from the permanent magnet, so it is placed in the magnetically saturated area so that the armature reaction magnetic flux cannot easily pass through. Further, in addition to the fundamental wave magnetic flux, harmonic wave magnetic flux occurs to the magnetic flux created by armature wiring. If harmonic wave magnetic flux created by armature wiring passes through the interpolar core placed in the magnetically saturated area, core loss is increased, with the result that effective use of reluctance torque is interfered.

One of the characteristics of the present invention is found in the capability of reducing the magnetic flux density of the rotor core where armature reaction magnetic flux passes by, and ensuring that a big reluctance torque is produced with a small amount of current. The first rotor core incorporating the permanent magnet is arranged in such a way that a concave portion is provided between poles in the vicinity of the outer surface on the first rotor core, so that the gap length of the magnetic path on the q-axis side is greater than that on the d-axis side. On the other hand, the second rotor core as a reluctance torque rotor is provided with an almost true round peripheral shape, without a permanent magnet placed in the permanent magnet insertion hole and without a concave portion formed between poles.

The arrangement described above ensures that the armature reaction magnetic flux cannot easily pass through the first rotor core with the permanent magnet embedded therein, because of the concave portion provided between poles in the vicinity of the outer surface, whereas armature reaction magnetic flux can pass through the interpolar core of the second rotor core without a permanent magnet placed in the permanent magnet insertion hole and without a concave portion formed between poles. Since the interpolar core of the second rotor core is not equipped with a permanent magnet, its magnetic flux density is low, and a big armature reaction magnetic flux is produced by a small amount of armature current. This results in a small core loss due to armature reaction magnetic flux. This makes it possible to provide a permanent magnet type rotating electrical machine capable of improving output by an effective use of reluctance torque.

Another characteristic of the present invention is found in that the permanent magnet type rotating electrical machine can be driven by a 180-degree current-applied sinusoidal wave inverter without magnetic pole position sensor.

Changes in reactance on the first rotor core side are reduced since concave portions are provided on the interpolar core of the first rotor core where the permanent magnet is inserted. Changes in reactance with respect to rotor position depend on the changes in reactance on the second rotor core side because flux barriers are provided on the second rotor core. Reactance with respect to rotor position on the second rotor core side changes almost in the form of a sinusoidal wave. This makes it possible to evaluate magnetic pole position by observing the reactance value, hence, to provide a permanent magnet type rotating electrical machine which can be driven by a 180-degree current-applied inverter without magnetic pole position sensor.

A further characteristic of the present invention is found in that the width of the permanent magnet insertion hole on the first rotor core is designed greater than that of the flux barrier provided on said second rotor core, or the permanent magnet insertion hole provided on the first rotor core is different from that of the flux barrier provided on the second rotor core.

This allows the permanent magnet to be firmly secured onto the first rotor core, thereby preventing it from being displaced into the second rotor core.

A further characteristic of the present invention is found in that the number of permanent magnet insertion holes on the second rotor core greater than that of the permanent magnet insertion holes provided on the first rotor core to ensure easy passage of armature reaction magnetic flux, thereby allowing reluctance torque to be increased.

A still further characteristic of the present invention is found in that the permanent magnet insertion hole and flux barrier installed on the first and second rotor core are formed in a straight line or shaped like a letter U or V.

A preferred embodiment of the present invention is that the permanent magnet insertion hole of the first rotor core and the flux barrier on the second rotor core have identically the same shape. This has an effect of increasing the mass production efficiency of core sheets for the first and second rotor cores formed by lamination of core sheets.

### BRIEF DESCRIPTION OF THE DRAWINGS:

Fig. 1 is a perspective view representing a rotor configuration as the first embodiment of a permanent magnet type rotating electrical machine according to the present invention;
Fig. 2 is a cross sectional view in the radial direction representing the rotor core configuration given in Fig. 1;
Fig. 3 is a cross sectional view in the radial direction representing a first rotor core 1 as the first embodiment of the permanent magnet type rotating electrical machine according to the present invention;
Fig. 4 is a cross sectional view in the radial direction representing a first rotor core 2 as the first embodiment of the permanent magnet type rotating electrical machine according to the present invention;
Fig. 5 is a cross sectional view in the radial direction representing the rotor core configuration as the second embodiment of the permanent magnet type rotating electrical machine according to the present invention;
Fig. 6 is a cross sectional view in the radial direction representing the rotor core configuration as the third embodiment of the permanent magnet type rotating electrical machine according to the present invention;
Fig. 7 is a cross sectional view in the radial direction representing the rotor core configuration as the fourth embodiment of the permanent magnet type rotating electrical machine according to the present invention;
Fig. 8 is a cross sectional view in the radial direction representing the rotor core configuration as the fifth embodiment of the permanent magnet type rotating electrical machine according to the present invention;
Fig. 9 is a cross sectional view in the radial direction representing the rotor core configuration as the sixth embodiment of the permanent magnet type rotating electrical machine according to the present invention;
Fig. 10 is a cross sectional view in the radial direction representing the rotor core configuration as the seventh embodiment of the permanent magnet type rotating electrical machine according to the present invention;
Fig. 11 is a cross sectional view in the radial direction representing the rotor core configuration as the eighth embodiment of the permanent magnet type rotating electrical machine according to the present invention;
Fig. 12 is a cross sectional view in the radial direction representing the rotor core configuration as the ninth embodiment of the permanent magnet type rotating electrical machine according to the present invention;
Fig. 13 is a cross sectional view in the radial direction representing the rotor core configuration as the tenth embodiment of the permanent magnet type rotating electrical machine according to the present invention;
Fig. 14 is a diagram representing the refrigeration cycle of an air conditioner as the eleventh embodiment according to the present invention; and
Fig. 15 is an electric connection diagram representing a 180-degree current-carrying inverter drive system as the twelfth embodiment according to the present invention.

### DETAILED DESCRIPTION OF THE INVENTION:

### (Description of the Preferred Embodiments)

The following describes the embodiments of permanent magnet type rotating electrical machines according to the present invention with reference to drawings:

### First Embodiment

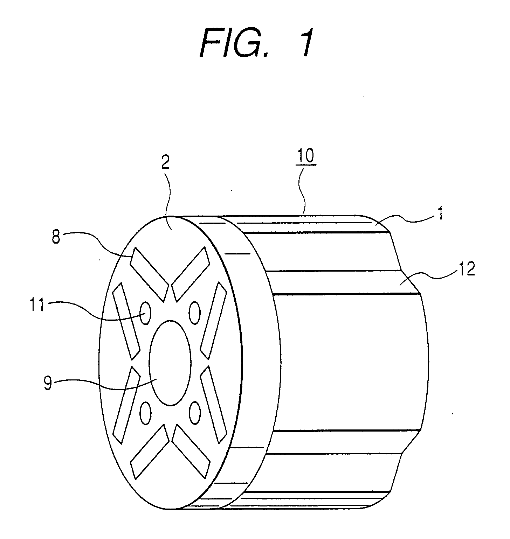

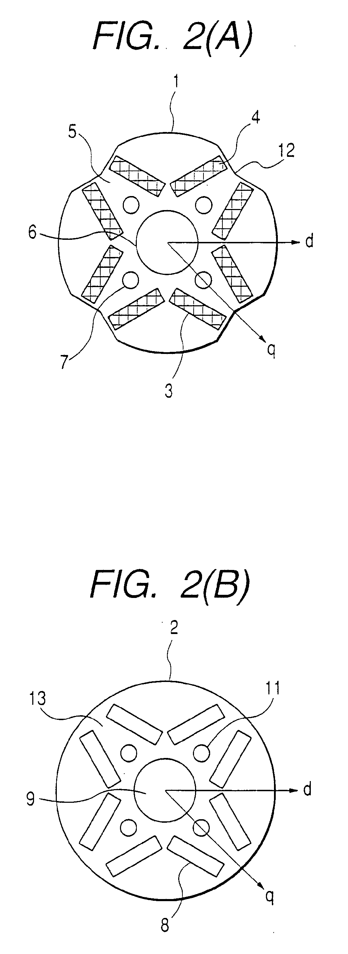

Fig. 1 is a perspective view representing a rotor configuration as the first embodiment of a permanent magnet type rotating electrical machine according to the present invention. Fig. 2 is a cross sectional view in the radial direction representing the rotor core configuration given in Fig. 1. In the drawings, a rotor 10 comprises a first rotor core 1 and the second rotor core 2. The first rotor core 1 comprises a rare earth permanent magnet 4 (four-pole type is shown here) arranged in the convex V-shaped permanent magnet insertion hole 3 with respect to the shaft of the rotor 10, an interpolar core 5, a rotor shaft hole 6 for being fitted to the shaft (not illustrated) and a river hole 7 for securing the first rotor core 1. The second rotor core 2 comprises a flux barrier (hole) 8 having identically the same shape as that of the permanent magnet insertion hole 3, namely, the convex V-shaped flux barrier (hole) 8 with respect to the shaft of rotor 10, as well as a rotor shaft hole 9 for being fitted to the shaft (not illustrated), and a river hole 11 for securing the second rotor core.

The difference between the first and second rotor cores is that a permanent magnet 4 is inserted in the permanent magnet insertion hole 3 of the first rotor core 1, whereas a permanent magnet is not inserted in the flux barrier (hole) 8 of the second rotor core 2. Moreover, they have difference shapes in the vicinity of the outer surface of the core, as will be explained below.

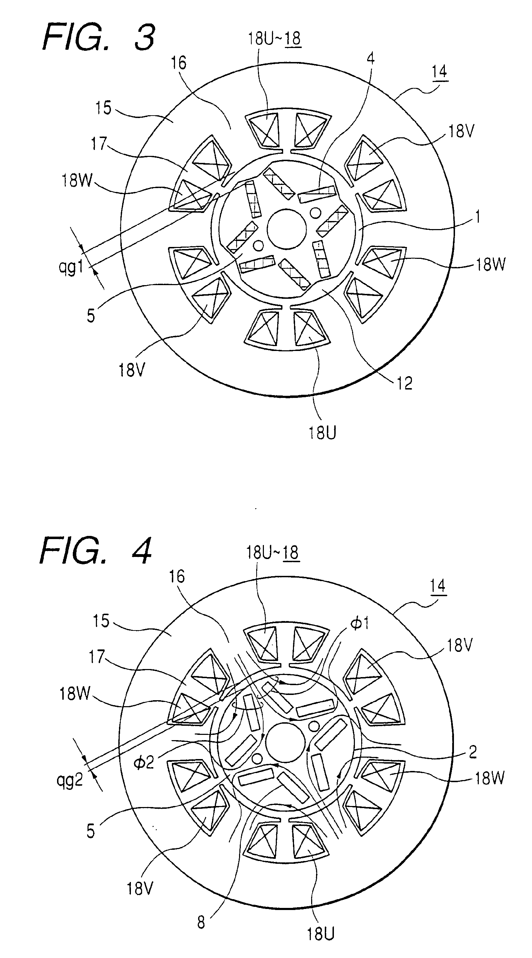

A V-shaped permanent magnet 4 is inserted in the permanent magnet insertion hole 3 of the first rotor core 1, and the central direction of this letter V is referred to as d-axis, which serves as a magnetic flux axis. The magnetic flux axis 90 degrees different from this d-axis in terms of electric angle is referred to as q-axis, which serves as an armature reaction axis. In order that the first rotor core 1 does not allow the armature reaction magnetic flux to pass through, a concave portion 12 is formed by slightly cutting the interpolar core 5 in a letter V in the vicinity of the rotor surface on the q-axis side. The concave portion is not formed on the interpolar core 13 of the second rotor core 2; therefore, the outer periphery of the second rotor core 2 is truly round, with the result that the armature reaction magnetic flux can easily pass through the core between poles 13 of the second rotor core 2. This will be explained in greater details using Fig. 3.

Fig. 3 is a cross sectional view in the radial direction representing a first rotor core 1 as the first embodiment of the permanent magnet type rotating electrical machine according to the present invention. Fig. 4 is a cross sectional view in the radial direction representing a first rotor core 2 as the first embodiment of the permanent magnet type rotating electrical machine according to the present invention. In Figs. 3 and 4, the stators 14 are the same, and multiple tees 16 and slots 17 are provided in the stator core 15. Armature wiring 18 in a concentrated winding is provided in the slot 17 so as to surround the tees 16; namely, U-phase winding 18U, V-phase winding 18V and W-phase winding 18W are provided in a concentrated winding.

When attention is paid to the rotor, passage of armature reaction magnetic flux through the interpolar core 5 of the first rotor core 1 is difficult according to the arrangement of the first rotor core 1 shown in Fig. 3. In other words, according to the arrangement of the first rotor core 1 of Fig. 3, the length of the gap on the q-axis side is as large as qg1. The interpolar core 5 is placed in the magnetically saturated area by the permanent magnet 4, and passage of armature reaction magnetic flux is made difficult. Accordingly, to allow the reluctance torque to be produced, a big armature current is essential, and the copper loss is increased. This makes it difficult to increase output by making an effective use of reluctance torque.

By contract, when the arrangement of the second rotor core 2 shown in Fig. 4 is used, passage of the armature reaction magnetic flux through the interpolar core 13 of the second rotor core 2 is easy. In other words, according to the arrangement of the second rotor core 2 given in Fig. 4, the length of gap on the q-axis side is as small as qg2. Since there is no permanent magnet, passage of armature reaction magnetic flux Φ1 and flux Φ2 through the interpolar core 13 is made easy. Accordingly, big armature reaction magnetic flux Φ1 and flux Φ2 are generated by a small armature current. This makes it possible to make an effective use of reluctance torque to get a permanent magnet type rotating electrical machine characterized by a large output.

Thus, it is possible to provide a permanent magnet type rotating electrical machine which supplies a sufficient torque, while saving the permanent magnet involving high price and recycling problems.

The permanent magnet insertion hole 3 of in the first rotor core 1 is made in identically the same form as the flux barrier (hole) 8 of the second rotor core 2. This has an effect of increasing the mass production efficiency of core sheets for the first and second rotor cores formed by lamination of core sheets.

### Second Embodiment

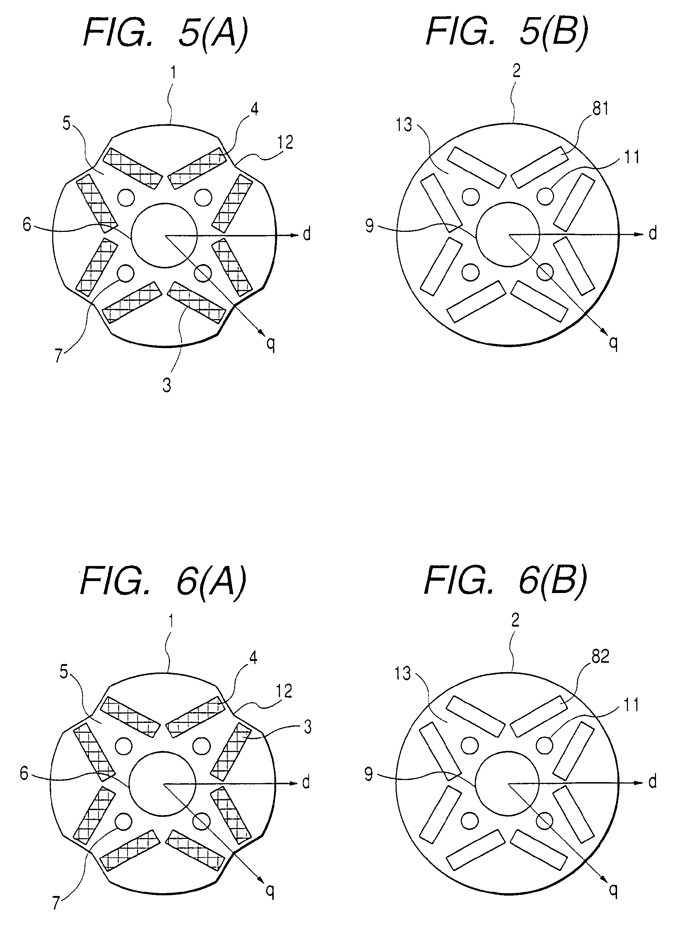

Fig. 5 is a cross sectional view in the radial direction representing the rotor core configuration as the second embodiment of the permanent magnet type rotating electrical machine according to the present invention. In Fig. 5, the same components as those in Fig. 2 will be assigned with the same numerals to avoid redundant explanation. The difference from Fig. 2 is that the width of the flux barrier (hole) 8 of the second rotor core 2 is smaller. In other words, the width of flux barrier (hole) 8 is reduced so that the permanent magnet 4 will not enter the second rotor core 2 when the permanent magnet 4 is inserted in the axial direction of the first rotor core 1. Then the permanent magnet 4 is positioned. This has the effect of reducing the number of production processes -- another advantage in addition to the basic performance described in the first Embodiment.

### Third Embodiment

Fig. 6 is a cross sectional view in the radial direction representing the rotor core configuration as the third embodiment of the permanent magnet type rotating electrical machine according to the present invention. In the drawing, the same components as those in Fig. 2 will be assigned with the same numerals to avoid redundant explanation. The difference from Fig. 2 is that the position of the flux barrier (hole) 82 of the second rotor core 2 is shifted toward the outer surface. In other words, the position of the flux barrier (hole) 8 is shifted so that the permanent magnet 4 will not enter the second rotor core 2 when the permanent magnet 4 is inserted in the axial direction of the first rotor core 1. Then the permanent magnet 4 is positioned. This has the effect of reducing the number of production processes - - another advantage in addition to the basic performance described in the first embodiment.

### Fourth Embodiment

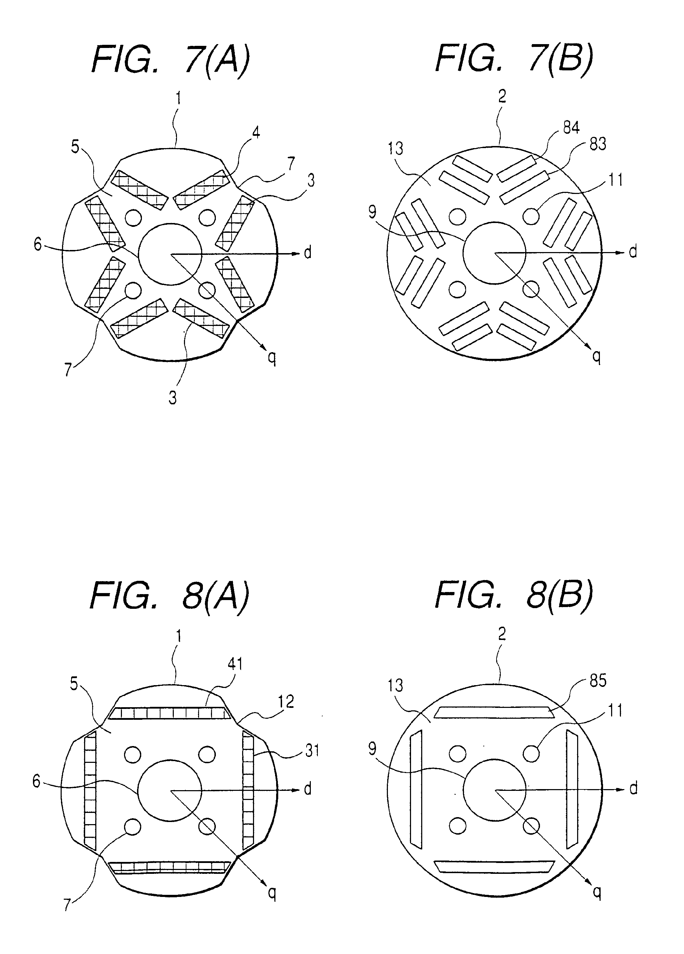

Fig. 7 is a cross sectional view in the radial direction representing the rotor core configuration as the fourth embodiment of the permanent magnet type rotating electrical machine according to the present invention. In the drawing, the same components as those in Fig. 2 will be assigned with the same numerals to avoid redundant explanation. The difference from Fig. 2 is that the flux barrier (hole) 8 of the second rotor core 2 is divided into two flux barriers (hole) 83 and 84 in order to ensure easy passage of armature reaction magnetic flux. This provides the same basic performance as that of the first embodiment, and will increase reluctance torque.

### Fifth Embodiment

Fig. 8 is a cross sectional view in the radial direction representing the rotor core configuration as the fifth embodiment of the permanent magnet type rotating electrical machine according to the present invention. In the drawing, the same components as those in Fig. 2 will be assigned with the same numerals to avoid redundant explanation. The difference of Fig. 8 from Fig. 2 is that the first rotor core 1 is formed by inserting a permanent magnet 41 made of one flat plate into the permanent magnet insertion hole 31 of a straight line (linear form). Correspondingly, the shape of the flux barrier (hole)85 of the second rotor core 2 is also changed. This has the effect of providing the basic performance described in the first embodiment.

### Sixth Embodiment

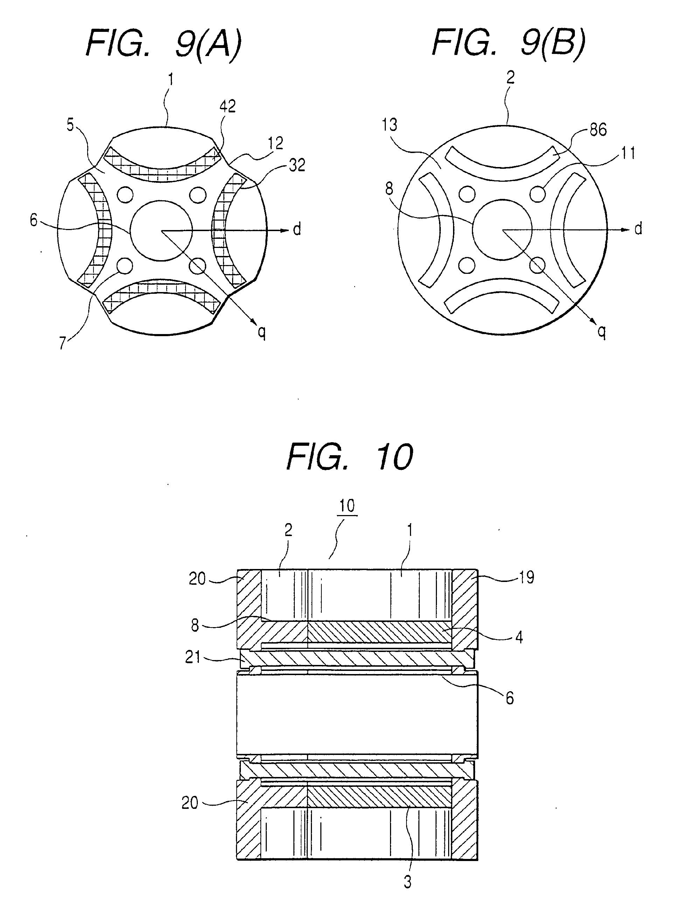

Fig. 9 is a cross sectional view in the radial direction representing the rotor core configuration as the sixth embodiment of permanent magnet type rotating electrical machine according to the present invention. In the drawing, the same components as those in Fig. 2 will be assigned with the same numerals to avoid redundant explanation. The difference from Fig. 2 is that the permanent magnet insertion hole 32, permanent magnet 42 in the first rotor core 1 and the flux barrier (hole) 86 of the second rotor core 2 are formed like a letter U (an arched form).

This has the effect of providing the basic performance described in the first embodiment. Furthermore, the shape of the flux barrier 8 in the second rotor core 2 is almost ideal in ensuring easy passage of armature reaction magnetic flux. This will enable a more effective use of reluctance torque.

### Seventh Embodiment

Fig. 10 is a cross sectional view in the radial direction representing the rotor core configuration as the seventh embodiment of the permanent magnet type rotating electrical machine according to the present invention. In the drawing, the same components as those in Figs. 1 and 2 will be assigned with the same numerals to avoid redundant explanation. The difference of Fig. 10 from Figs. 1 and 2 is that balance weights 19 and 20 are on the first rotor core 1 and the second rotor core 2 respectively, and the flux barrier (hole) 8 is filled with the balance weight 20 of non-magnetic substance on the second rotor core 2 side. In other words, the permanent magnet 4 can be positioned so that the permanent magnet 4 will not enter the second rotor core 2 when the permanent magnet 4 is inserted in the axial direction of the first rotor core 1. Rivets 21 are provided to fix the first rotor core 1 and the second rotor core 2 in position. The present embodiment provides the same basic performance described in the first embodiment.

### Eighth Embodiment

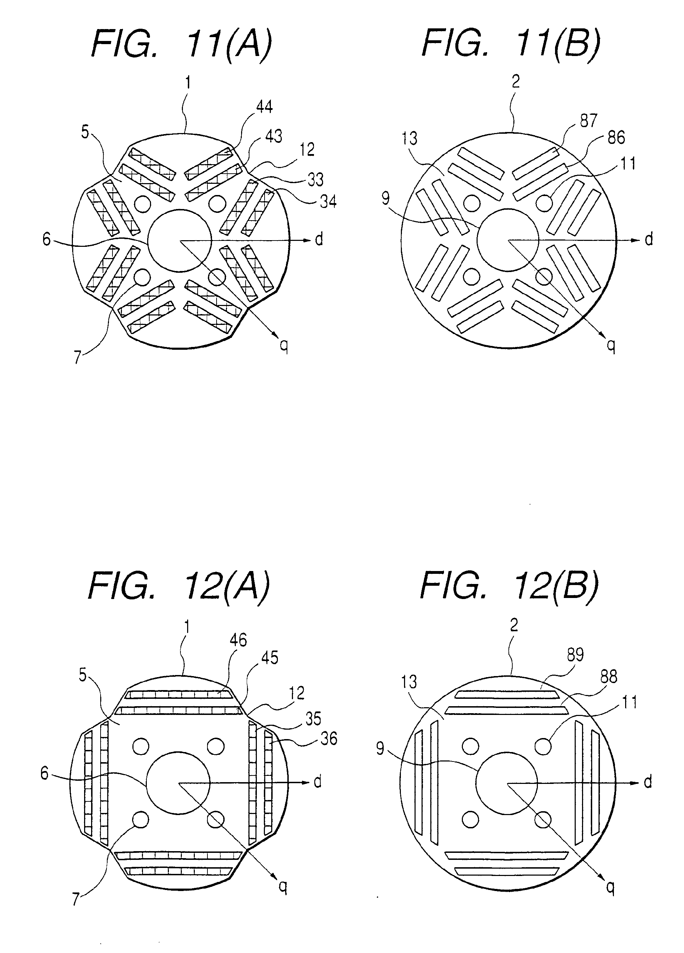

Fig. 11 is a cross sectional view in the radial direction representing the rotor core configuration as the eighth embodiment of the permanent magnet type rotating electrical machine according to the present invention. In the drawing, the same components as those in Fig. 2 will be assigned with the same numerals to avoid redundant explanation. The difference from Fig. 2 is that the flux barriers (holes) 86 and 87 of the second rotor core 2 are arranged to form a dual V-shape in order to ensure easy passage of armature reaction magnetic flux. In addition, permanent magnet insertion holes 33 and 34 in the first rotor core 1 are also formed in a dual V-shape. Permanent magnets 43 and 44 are also inserted in them. This will provide the same basic performance as that of the first embodiment, and will increase reluctance torque in the second rotor core 2.

### Ninth Embodiment

Fig. 12 is a cross sectional view in the radial direction representing the rotor core configuration as the nine embodiment permanent magnet type rotating electrical machine according to the present invention. In the drawing, the same components as those in Fig. 2 will be assigned with the same numerals to avoid redundant explanation. The difference from Fig. 2 is that permanent magnets 45 and 46 are inserted in the permanent magnet insertion holes 35 and 36 on the first rotor core 1, and permanent magnets 45 and 46 are configured in a dual structure. Correspondingly, the shape of flux barriers (holes) 88 and 89 of the second rotor core 2 is also changed. This will provide the same basic performance as that of the first embodiment.

### Tenth Embodiment

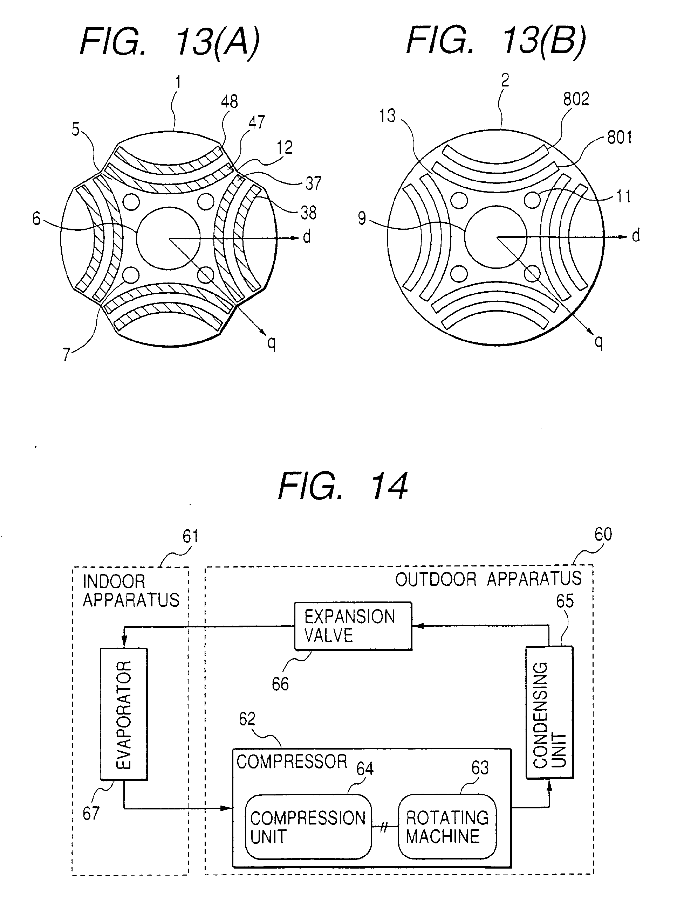

Fig. 13 is across sectional view in the radial direction representing the rotor core configuration as the tenth embodiment of permanent magnet type rotating electrical machine according to the present invention. In the drawing, the same components as those in Fig. 2 will be assigned with the same numerals to avoid redundant explanation. The difference from Fig. 2 is that permanent magnet insertion holes 37 and 38 of a dual U-shape structure are used as the permanent magnet insertion hole 3 of the first rotor core 1. Permanent magnets 47 and 48 are inserted in them. Correspondingly, the flux barrier (hole) 8 of the second rotor core 2 is also changed into flux barriers (holes) 801 and 802 of dual U-shaped (arched) structure. This will provide the same basic performance as that of the first embodiment, and will increase reluctance torque in the second rotor core 2.

### Eleventh Embodiment

Fig. 14 is a block diagram representing the refrigeration cycle of an air conditioner as the eleventh embodiment according to the present invention. Numeral 60 denotes an outdoor apparatus, 61 an indoor apparatus and 62 a compressor. The permanent magnet type rotating electrical machine 63 and compressor 64 are sealed in the compressor 62. Numeral 65 denotes a condenser, 66 an expansion valve, and 67 an evaporator. In the freezing cycle, the refrigerant is circulated in the direction of an arrow and is compressed by the compressor 62. Then heat exchange is performed between an outdoor apparatus 60 consisting of a condenser 65 and expansion valve 66, and an indoor apparatus 61 consisting of an evaporator 67, whereby cooling function is performed.

In the following description, the permanent magnet type rotating electrical machine shown in the embodiments given above will be used as permanent magnet type rotating electrical machine 63. This will improve the output of the permanent magnet type rotating electrical machine 63 and will reduce the air conditioner input. So it has the effect of reducing the emission of CO2 which may cause global warming. It goes without saying that the same effect can be obtained when used in the compressor of the refrigerator and freezer.

### Twelfth Embodiment

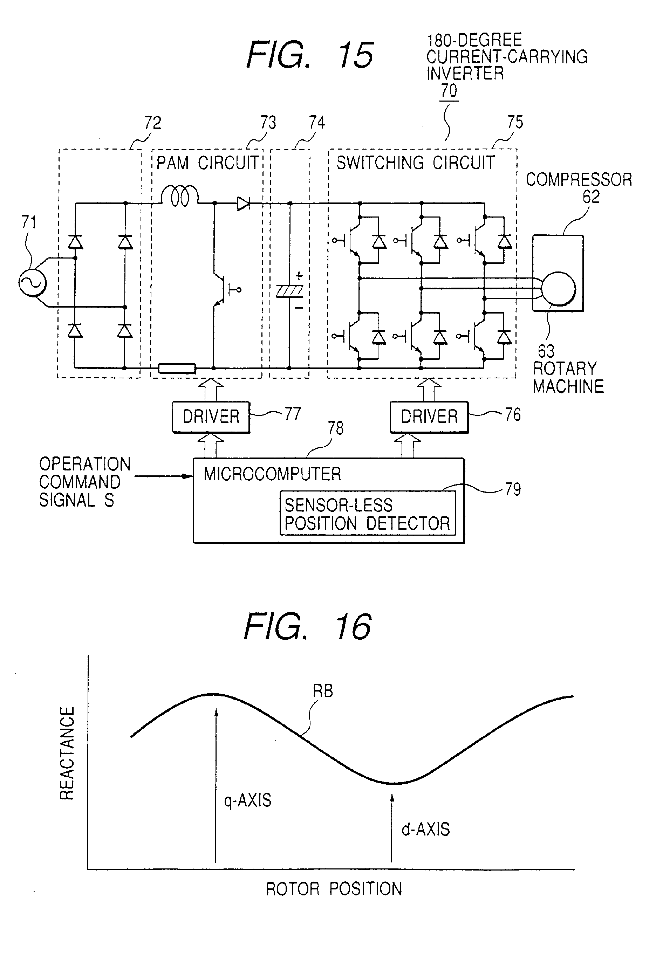

Fig. 15 is a diagram representing a permanent magnet type motor drive system by a 180-degree current-carrying inverter drive system as the twelfth embodiment according to the present invention. Numeral 70 denotes a 180-degree current-applied inverter, 71 a single-phase a. c. power supply, 72 a rectifying and smoothing circuit, 73 a PAM circuit, 74 a smoothing capacitor, 75 a switching circuit, 76 a driver for switching circuit 75, 77 a driver for PAM circuit 73, 78 a microcomputer, 79 a sensor-less position detector of software configuration, and 62 a compressor. A permanent magnet type rotating electrical machine 63 described in embodiments described above is enclosed in this compressor 62. Symbol S denotes an operation command signal. First, the following describes the reactance distribution of the permanent magnet type rotating electrical machine according to the present invention.

Fig. 16 is a drawing representing the reactance distribution RB of the permanent magnet type rotating electrical machine according to the present invention as an embodiment of the present invention. When d-axis is assumed as representing the direction of magnetic flux of the permanent magnet, and the q-axis as representing the axis which intersects it at a right angle, it can be seen that reactance distribution RB of d-axis and q-axis with respect to rotor position is changed into the sinusoidal waveform.

When operation command signal S is given to the microcomputer 77 in Figs. 15 and 16, voltage is applied to the permanent magnet type rotating electrical machine 63, and the flowing current is detected. When reactance of the permanent magnet type rotating electrical machine 63 is obtained by computation from the relationship between this applied voltage and current, the magnetic pole position d-axis during stop can be determined at position detector 79 without sensor from the characteristics shown in Fig, 16. In conformity to output signal from this position detector 79 without sensor, permanent magnet type rotating electrical machine 63 in the compressor 62 is started and accelerated as an synchronous motor. When a specified speed is reached, the magnetic pole position d-axis is evaluated from the induced voltage of the permanent magnet type rotating electrical machine 63 by the position detector 79 without sensor based on the reactance distribution of the rotor. In response to the output signal, the permanent magnet type rotating electrical machine 63 can be accelerated as a synchronous motor. When a specified speed is reached, the PAM circuit 73 is actuated to increase the d. c. voltage of the smoothing capacitor 74.

Here an inverter drive method is used to driver the compressors of the air conditioner, refrigerator and freezing in order to save energy. When the permanent magnet type rotating electrical machine is driven by the inverter method, the magnetic pole position of the permanent magnet of the rotor must be detected. However, the temperature in the compressor 62 exceeds 100 degrees Celsius, so a magnetic pole position sensor such as Hall IC cannot be used. Incidentally, in the case of a 120-degree current-applied inverter, magnetic pole position can be detected from the induced voltage when the current at an electric angle of 60 degrees is not running. However, this is not possible when a 180-degree current-applied inverter is use for driving. Accordingly, the permanent magnet type rotating electrical machine is driven by the 180-degree current-applied inverter, magnetic pole position must be detected from the change in reactance. In this case, mere change of reactance is not sufficient. To detect any magnetic pole position, the waveform must be ever-changing sinusoidal waveform or triangular waveform.

By contract, in the permanent magnet type rotating electrical machine 63 according to the present invention, a concave portion is provided on the interpolar core 5 of the first rotor core 1 where permanent magnet 4 is inserted to reduce the change in reluctance on the rotor core 1 side. And a flux barrier (hole) 8 is provided on the second rotor core 2, so the change in reactance with respect to rotor position depends on the change in reactance on the second rotor core 2 side, and reactance with respect to rotor position on the second rotor core 2 side changes in almost sinusoidal waveform. Accordingly, magnetic pole position can be determined by detecting the reactance during stop. Thus, a permanent magnet type rotating electrical machine 63 can be driven a 180-degree current-applied inverter without magnetic pole position sensor.

As a result, compared with the case where a 120-degree current-applied inverter is used for driving, the output can be improved and torque ripple during commutation can be reduced, whereby noise is minimized, if the permanent magnet type rotating electrical machine is driven by a 180-degree current-applied inverter.

According to the embodiments described above, the passage of armature reaction magnetic flux is made difficult by increasing the length of the gap on the q-axis side of the first rotor core 1 provided with a permanent magnet, whereas the passage of armature reaction magnetic flux is made easy by reducing the length of the gap on the q-axis side of the second rotor core 2 without a permanent magnet. This makes it possible to generate a large armature reaction magnetic flux with a small amount of armature current. A permanent magnet type rotating electrical machine capable of delivering a large output can be provided by making an effective use of reluctance torque. Furthermore, the second rotor core 2 is provided with flux barriers, so the change in reactance with respect to rotor position depends on the change in reactance on the second rotor core 2 side, and reactance with respect to rotor position changes in almost sinusoidal waveform. Accordingly, a permanent magnet type rotating electrical machine can be driven by a 180-degree current-applied inverter without magnetic pole position sensor. As a result, the output can be improved and torque ripple during commutation can be reduced, whereby noise is minimized when compared with the case where a 120-degree current-applied inverter is used for driving.

### (Effects of the Invention)

According to the present invention, a permanent magnet type rotating electrical machine capable of delivering a large output can be provided by making an effective use of reluctance torque. In addition, the permanent magnet type rotating electrical machine can be driven by a 180-degree current-applied inverter without magnetic pole position sensor. As a result, the output can be improved and noise can be minimized when compared with the case where a 120-degree current-applied inverter is used for driving.

## Claims

1. A permanent magnet type rotating electrical machine comprising;
a stator (14) provided with armature wiring (18) in multiple slots (17) on a stator core (15),
a first rotor core (1) split into multiple parts in the axial direction and containing permanent magnets (4) built in multiple permanent magnet insertion holes (3), and
a second rotor core (2) for producing reluctance torque;
said permanent magnet type rotating electrical machine
**characterized in that** said first rotor core is arranged so that the gap length (g1) of the magnetic path on the q-axis side is greater than that on the d-axis side.

2. A permanent magnet type rotating electrical machine comprising;
a stator (14) provided with armature wiring (18) in multiple slots (17) on a stator core (15),
a first rotor core (1) split into multiple parts in the axial direction and containing permanent magnets (4) built in multiple permanent magnet insertion holes (3), and
a second rotor core (2) for producing reluctance torque;
said permanent magnet type rotating electrical machine
**characterized in that** a concave portion (12) is provided between poles in the vicinity of the outer surface on said first rotor core (1), and a flux barrier (8) having almost the same form as that of said permanent magnet insertion hole is formed on said second rotor (2) core in the cross section in the radial direction.

3. A permanent magnet type rotating electrical machine comprising;
a stator (14) provided with armature wiring (18) in multiple slots (17) on a stator core (15),
a first rotor core (1) split into multiple parts in the axial direction and containing permanent magnets (4 built in multiple permanent magnet insertion holes (3), and
a second rotor (2) core for producing reluctance torque;
said permanent magnet type rotating electrical machine
**characterized in that** a concave portion (12) is provided between poles in the vicinity of the outer surface on said first rotor core, and
a flux barrier (8) having almost the same form as that of said permanent magnet insertion hole, and
an almost true round peripheral shape are formed on said second rotor core (2) in the cross section in the radial direction.

4. A permanent magnet type rotating electrical machine comprising;
a stator (14) provided with armature wiring (18) in multiple slots (17) on a stator core (15),
a first rotor core (1) split into multiple parts in the axial direction and containing permanent magnets (4) built in multiple permanent magnet insertion holes (3), and
a second rotor core (2) for producing reluctance torque;
said permanent magnet type rotating electrical machine
**characterized in that** a concave portion (12) is provided between poles in the vicinity of the outer surface on said first rotor core, and
said second rotor core has a hole (8) having almost the same form as that of said permanent magnet insertion hole (3) wherein said hole is devoid of permanent magnet, and
an almost true round peripheral shape in the cross section in the radial direction.

5. A permanent magnet type rotating electrical machine according to any one of Claims 1 to 4
**characterized in that** the width of said permanent magnet insertion hole on said first rotor core is designed greater than that of said flux barrier or said hole provided on said second rotor core.

6. A permanent magnet type rotating electrical machine comprising;
a stator (14) provided with armature wiring (18) in multiple slots (17) on a stator core, and
a first rotor core (1) containing permanent magnets (4) built in multiple permanent magnet insertion holes (3) formed on the rotor core;
wherein said rotor further comprising;
a first rotor core further provided with a permanent magnet insertion hole incorporating a permanent magnet and
a concave portion (12) between the poles in the vicinity of the outer surface; and
a second rotor core (2) split from said first rotor core in the axial direction and forming the same form as that of said permanent magnet in the cross section in the radial direction.

7. A permanent magnet type rotating electrical machine comprising;
a stator (14) provided with armature wiring (18) in multiple slots (17) on a stator core (15), and
a first rotor core (1) containing permanent magnets (4) built in multiple permanent magnet insertion holes (3) formed on the rotor core;
wherein said rotor further comprising;
a first rotor core (1) further provided with a permanent magnet insertion hole (3) incorporating a permanent magnet (4) and
a concave portion (12) between the poles in the vicinity of the outer surface; and
a second rotor core (2) split from said first rotor core (1) in the axial direction, forming the same form as that of said permanent magnet in the cross section in the radial direction, and having almost true round peripheral shape.

8. A permanent magnet type rotating electrical machine according to any one of Claims 1 to 7 **characterized in that** arrangement of said permanent magnet insertion hole provided on said first rotor core is different from that of said flux barrier or said hole provided on said second rotor core.

9. A permanent magnet type rotating electrical machine according to any one of Claims 1 to 8 **characterized in that** the number of flux barriers or holes provided on said second rotor core is greater than that of said permanent magnet insertion holes provided on said first rotor core.

10. A permanent magnet type rotating electrical machine according to any one of Claims 1 to 8 **characterized in that** said permanent magnet insertion holes provided on said first rotor core and the flux barriers or holes provided on said second rotor core are formed in a straight line or shaped like a letter U or V.

11. A permanent magnet type rotating electrical machine according to any one of Claims 1 to 10 **characterized in that** said permanent magnet insertion holes provided on said first rotor core and the flux barriers or holes provided on said second rotor core are formed like a letter duplicate U or V.

12. A permanent magnet type rotating electrical machine according to any one of Claims 1 to 11 **characterized in that** non-magnetic substances are inserted in the flux barriers or holes provided on said second rotor core.

13. A permanent magnet type rotating electrical machine according to any one of Claims 1 to 12 **characterized in that** said permanent magnet rotating electrical machine is driven by a 180-degree current-applied sinusoidal wave inverter without magnetic pole position sensor.

14. A compressor arranged to be driven by a permanent magnet type rotating electrical machine according to any one of Claims 1 to 13.

15. An air conditioner comprising a compressor according to any one of Claims 1 to 14.
